# EUROPEAN PATENT SPECIFICATION

(11) **EP 2 840 753 B1**
(45) Date of publication and mention of the grant of the patent: **15.05.2019**
(21) Application number: 13196135.1
(22) Date of filing: 21.05.2009
(51) Int. Cl.: H04L 29/06, H04L 12/26, H04L 12/24, G06F 21/55

(54) **System and method for discovery of network entities**
System und Verfahren zur Entdeckung von Netzwerkentitäten
Système et procèdè pour découvrier des entités de réseau

(30) Priority: 21.05.2008 US 54945 P
(43) Date of publication of application: 25.02.2015
(62) Divisional of application: 09750982.2
(73) Proprietor: McAfee, LLC, Santa Clara CA 95054 (US)
(72) Inventor: Sherlock, Kieran Gerard, Palo Alto, CA California 94306 (US); Valente, Luis Filipe Pereira, Palo Alto, CA California 94303 (US); Pearcy, Derek Patton, San Francisco, CA California 94133 (US); Cooper, Geoffrey Howard, Palo Alto, CA California 94301 (US)
(74) Representative: Goddar, Heinz J.

(56) References cited:
- WO-A1-02/03219
- US-B1- 6 502 131
- US-B1- 7 395 244

## Description

### Technical Field

The disclosure relates generally to network security and in particular to systems and methods for network discovery.

### Limited Copyright Waiver

A portion of the disclosure of this patent document contains material to which the claim of copyright protection is made. The copyright owner has no objection to the facsimile reproduction by any person of the patent document or the patent disclosure, as it appears in the U.S. Patent and Trademark Office file or records, but reserves all other rights whatsoever.

### Background

Companies today face the task of continuously monitoring and verifying who is accessing critical business systems, what they are doing during each access and where they are accessing from. The challenge is that, when manually attempted, visibility into your network and your critical business applications is often nothing more than a static, after-the-fact "snapshot in time." U.S. Patent Application No. 11/854,392, entitled "Identities Correlation Infrastructure for Passive Network Monitoring", filed September 12, 2007, describes, however, one approach for identifying and continuously monitoring user access to critical business systems. The systems proposed to date require administrators to identify users and group them with other users. In addition, the systems to date present data in ways that can be difficult to understand. What is needed is a system and method for identifying and classifying users, and for monitoring network activity as a function of the classifications of network users. What is also needed is a system and method for displaying network activity based on identified groups of users in a clear and concise manner. Finally, what is needed is a system and method for controlling network access as a function of the identified groups of users.

In US 7 395 244 B1, classification of criticality of assets detected an network traffic is disclosed.

The invention is defined in the appended independent claims.

### Brief Description of the Drawings

FIGS. 1a and b illustrate computer systems having one or more network monitors;
FIGS. 2a and 2b illustrate embodiments of the network monitors of FIGS. 1a and 1b;
FIGS. 3-6a illustrate methods of displaying and controlling identity-based network traffic;
FIG. 6b illustrates a method of controlling network behavior;
FIG. 7 illustrates a method of displaying identity-based behavior across networks connected by one or more firewalls;
FIG. 8 illustrates a method of controlling network behavior across networks connected by one or more firewalls;
FIGS. 9a-9c illustrate methods of assigning users to groups;

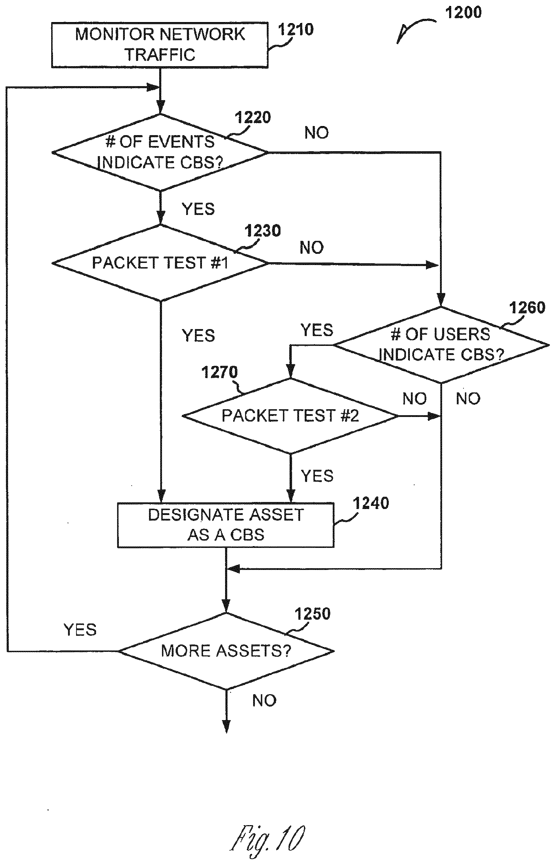

FIG. 10 illustrates a method of asset discovery;
FIG. 11 illustrates a method of using discovery for policy development;
FIG. 12 is a schematic diagram illustrating a medium having an instruction set for implementing the systems and methods described.

### Detailed Description

Unsecured and improper practices by authorized insiders can create substantial risk to critical business systems. Outsourcers, offshore developers, contractors, careless employees, partners, joint ventures, and others must be monitored. Yet monitoring security to the standards recommended by CERT and others is nearly impossible to do in real time with traditional security tools. And using log data to get this level of information can drain valuable IT resources while still falling short of delivering real-time operational visibility and control.

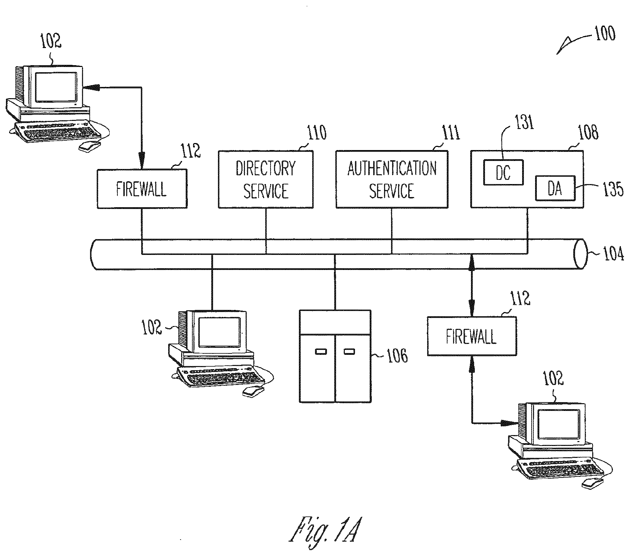

Fig. 1a illustrates a system which monitors user behavior to provide automated, identity-based monitoring of user accesses to critical business systems. In Fig. 1a, computer system 100 includes a number of workstations 102 and one or more data centers 106 having one or more servers or mainframes each. Workstations 102 communicate with data centers 106 over a network 104. In the embodiment shown, some of the workstations 102 communicated with data center 106 via a firewall 112 communicatively coupled to network 104.

In computer system 100 of Fig. 1a, a network monitor 108 continuously monitors network traffic on network 104. In one embodiment, monitor 108 includes a data collector (DC) 131 connected to a data analyzer (DA) 135. Data collector 131 passively captures network traffic. Data analyzer 135 decodes and analyzes the captured network traffic.

In one embodiment, network monitor 108 provides automated, identity-based monitoring to keep computer system 100 in compliance and in control. This comprehensive monitoring solution delivers complete visibility and verification of who is doing what and where on an automated, continuous, real-time basis. By identity, we mean the actual user name, group name, and role correlated to behavior and delivered in real time-not after the fact.

In one embodiment, network monitor 108 communicates with a directory service 110 and an authentication service 111 over network 104. In one such embodiment, network monitor 108 integrates with existing directory stores, such as Microsoft Active Directory, leveraging actual user and group information to dynamically determine when a user accesses the network. In another such embodiment, network monitor 108 integrates with existing directory stores, such as Microsoft Active Directory, leveraging actual user, group, and role information to dynamically determine when a user accesses the network. Network monitor 108 queries the directory in real time, and then correlates users and their groups with all related access and activity. In one embodiment, user identity credentials are detected in the traffic without the use of any agents on the client or server side.

For example, a user named jsmith logs into the network. Network monitor 108 identifies this action and immediately determines that jsmith is part of the marketing group and has a job role that allows her access to the marketing database and a joint-venture database but not the finance database. Network monitor 108 continues to monitor network traffic to ensure that j smith's actions abide by this policy as well as all other established security controls.

In one embodiment, monitors 108 passively capture, decode, and analyze traffic via native deep packet inspection (DPI). They use port mirroring or passive network taps to obtain full packet data for protocol decoding up to the application layer (layer 7). This level of detail is often required to ensure a tamperproof view of network activity within critical data centers and critical business systems.

In one such embodiment, flow monitors within monitor 108 leverage existing flow-based data from Cisco Netflow, Juniper J-Flow, and others for analysis. This broader network view is often useful for gaining a cost-effective, enterprise-wide view of who is doing what and from where across the entire network, including remote locations.

In another such embodiment, network monitors are used in a "Mixed" mode that combines both DPI and flow-based data.

In one embodiment, network monitor 108 operates on firewall audit logs to analyze traffic through the firewall. In one such embodiment, network entity discovery (e.g., user discovery or asset discovery) is used to drive security policy for both the network monitor 108 and the firewall 112.

In one embodiment, network monitor 108 is part of a tiered architecture that comprises network monitors 108, control centers and report appliances. This approach has the deployment advantages of an out-of-band, network-based solution without the need for agents or application integration.

In such an approach, network monitors 108 provide the cornerstone monitoring function. Monitors 108 are network-based and designed to capture and analyze critical traffic data inside the network using one of the three methods described above.

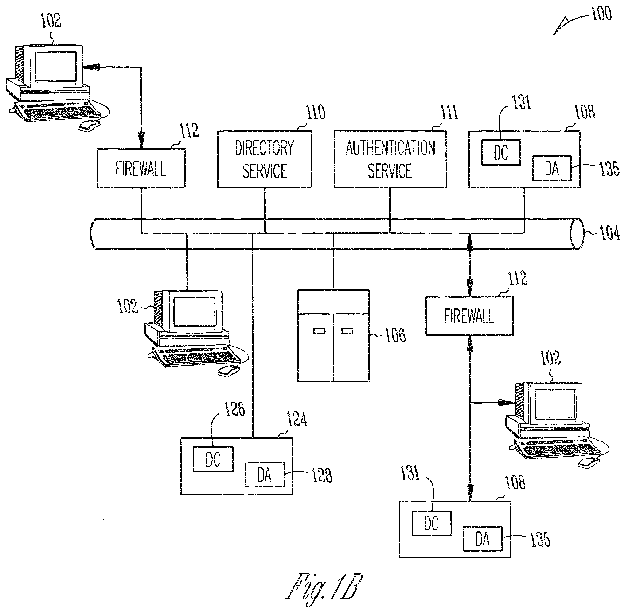

As shown in Fig. 1b, in some embodiments, computer system 100 includes two or more network monitors 108 and a control center 124. Control center 124 consolidates and centralizes the ongoing monitoring, analysis, and management of all sizes of deployments-everything from a few network monitors 108 to a worldwide deployment of network monitors 108.

In one such embodiment, large entities can easily stratify and delegate their management capabilities with control center 124. For example, you could retain the ability to analyze and control network activity at an overall organizational level while also allowing your various operating divisions or security zones to monitor and manage network activity that's specific to their group.

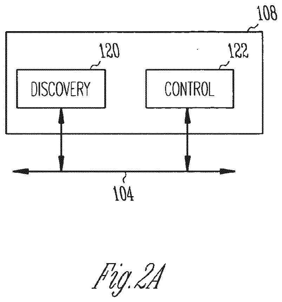

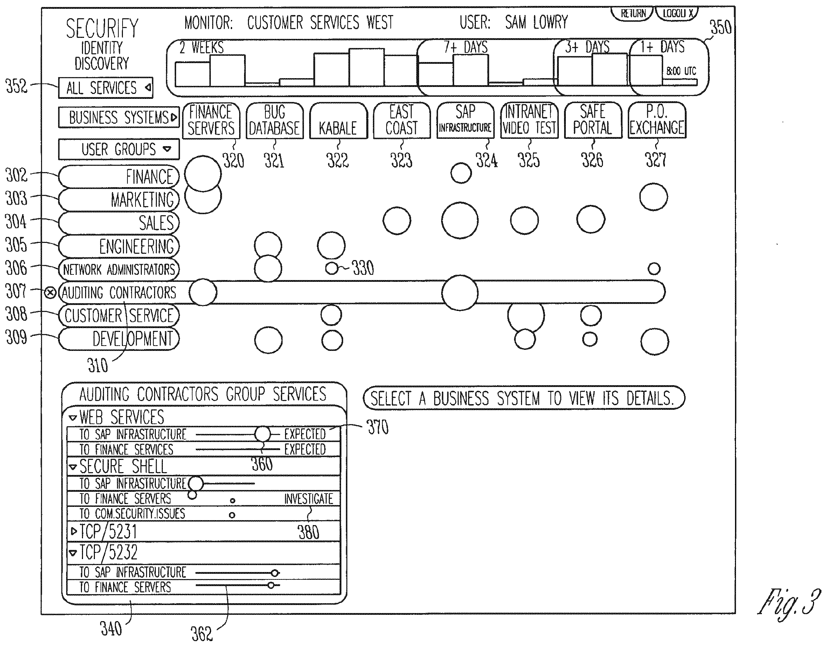

In one embodiment, as is shown in Fig. 2a, network monitor 108 includes a discovery module 120 and a control module 122. In one such embodiment, discovery module 120 includes an automated discovery capability that helps uncover the "who, what, and where" during the planning phase of change projects, i.e., determining which users are accessing what applications on which computers, without requiring any prior knowledge of the network behavior. A Discovery Dashboard such as is shown in Fig. 3 provides a single view of passively monitored traffic and correlates user groups and their associated activity on critical business systems.

In one embodiment, discovery module 120 provides additional analysis capabilities, including the ability to focus on a single system. For example, you could concentrate network monitor 108 on a specific CRM or accounting system. Likewise, you can use network monitor 108 to discover all user groups or focus on a specific user group, office location, or network boundary. For instance, you could monitor for sales representatives accessing a particular system from headquarters. Additional information on what users are doing is also provided, including protocol decode, ports, bandwidth, URLs, and commands. This level of detail is extremely useful for network rezoning and segmentation, or application and server moves that might impact users' ability to access their applications.

As noted above, in some embodiments, network monitor 108 communicates directly with existing network directories, leveraging existing groups and memberships. Additionally, network monitor 108 may leverage local directories for special-purpose groups and memberships.

In one embodiment, control module 122 applies user-based policies and then graphically illustrates the network usage of users and groups to critical systems, clearly denoting what activity is acceptable, what activity is unacceptable and what activity merits a closer look by the security and operations teams.

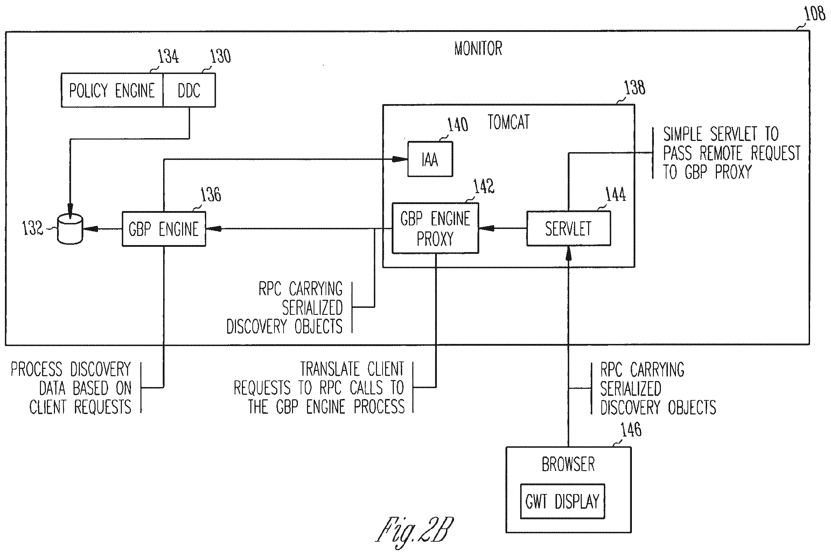

Fig. 2b illustrates one embodiment of network monitor 108. In Fig. 2b, network monitor 108 includes a discovery data collector (DDC) 130 connected to a discovery data store 132 and a policy engine 134. Network monitor 108 also includes a Group Based Profiling (GBP) engine 136 connected to a control module 138. Control module 138 includes an Identity Acquisition Agent (IAA) 140, a GBP engine proxy 142 and a servlet module 144. In one embodiment, users communicate with network monitor 108 via a web browser 146.

In the embodiment shown, DDC 130 runs on the Monitor and stores its data locally. In other embodiments, DDC 130 or discovery data store 132 could be accessed remotely from network monitor 108. In one such embodiment, control center 124 includes a data store (DS) 126 connected to a data analyzer 128 (as shown in Fig. 1b). Data store 126 stores discovery data accessed remotely from network monitor 108. Data analyzer 128 analyzes the network monitor data.

In the embodiment shown, GBP engine 136 runs on monitor 108, processing the DDC data in the data discovery data store 132 at the user's request. In one such embodiment, the GBP engine runs as a standalone java daemon, exporting an interface to its client.

In one such embodiment, the UI processes GBP data for the local Monitor only. In one such embodiment, GBP data generated by the GBP engine in response to UI initiated queries is used by servlet module 144 to generate UI pages that are in turn displayed by a browser.

In some embodiments, as is shown in Fig. 2b, GBP engine 136 includes an interface to IAA 140 for obtaining group membership information.

In one embodiment, the GBP engine 136 runs in the Monitor aggregating and processing data provided by the DDC 130. The GBP engine 136 will be described in greater detail below.

The GBP engine 136 provides an interface to the GBP Engine Proxy 142 through which the Web UI components make requests and receive results.

In one embodiment, the GBP Engine Proxy 142 (hereinafter referred to as "proxy 142") uses a socket interface to communicate with the GBP Engine 136. This interface supports multiple concurrent asynchronous requests. Each request to the proxy is made on a separate thread and that thread is blocked until the request is completed, times out or the connection to the engine is abnormally terminated. Thus, within each socket connection requests are handled synchronously.

The RPC protocol between the engine and the proxy consists of a handshake phase followed by a request/response phase. Each connection is initiated by the proxy and accepted by the engine.

If the engine status is READY the proxy 142 can send a request to be processed. In one embodiment, each request is handled synchronously, i.e., a new request cannot be issued until the previous request has completed.

Requests and responses are encoded as serialized Java objects using the standard Java object serialization mechanism.

In one embodiment, the GBP engine 136 is restarted whenever there is a configuration change or a policy change.

The GBP engine uses a DDC Read Interface 150 to load into memory all the DDC records required to perform its functions. A DDC data record summarizes the traffic observed between two network endpoints (e.g., a user and a server) for a specific network service over a given time period (e.g., one day). In order to produce results within an acceptable time period, in one embodiment, the engine caches its working set data and updates the cache periodically.

Policy management will be discussed next. In one embodiment, The GBP engine loads the current network security policy from the file system. The policy provides GBP engine 136 with information on already identified network assets, such as Critical Business Systems (CBSs), network services of interest, as well as, currently defined local groups.

Groups will be discussed next. When computing a set of groups to be used to classify users, GBP engine 136 takes into account both the user's membership in network directory groups and the user's membership in any local directory groups, such as those defined in policy. Anonymous users are automatically included in a pre-defined Anonymous group, while users that are not members of any directory group considered to be members of the *Other Groups* pre-defined group.

In some embodiments of the network monitor shown in Fig. 2b, the GBP engine 136 interfaces to the Identity Acquisition Agent (IAA) 140 to determine the groups of which a user is a member. In some embodiments, users comprise both human users and computers acting as clients of networked resources. The GBP engine 136 requests the following information from the IAA 140:
1) For a given user, the groups of which that user is a member; the set returned by the IAA represents the transitive closure of the user's group membership, including both network directory groups and local directory groups; and
2) For a given group, the number of active users in that group.

In one embodiment, all Identity Acquisition is performed by the Identity Acquisition Manager (IAM) of IAA 140. The IAM computes the number of active users per user group, where an active user is defined as being one that has been authenticated in the last YY days. This information is provided to the Identity Acquisition Agent (IAA) 140 periodically. The number of active users in a group need not be updated more than once a week.

In one embodiment, the IAA access protocol is extended to allow the GBP engine 136 to query the IAA 140 for the current list of groups, their active user counts and their list of users.

In one embodiment, Anonymous Intranet users are segregated by IP address. An anonymous user whose IP address falls within the Intranet is identified by its computer's IP address. Thus, in the list of users that are clients of a service, anonymous Intranet users will be denoted by their IP addresses.

On the other hand, Anonymous users outside the Intranet are not uniquely identified.

An anonymous Internet user is given the name Internet whereas an anonymous Extranet user receives the name Extranet. Thus, all anonymous users outside the Intranet coalesce into a single Internet user and a single Extranet user. However, and optionally, anonymous users may be segregated by their IP addresses, i.e., anonymous Internet and Extranet users are treated identically to anonymous Intranet users.

When computing group membership, GBP engine 136 also takes into account and ignores any and all groups that have been dismissed through the GBP UI. The built-in groups Anonymous and Other Groups cannot be dismissed.

As noted above, users that are not members of a network directory group or a local directory group are considered to be members of the *Other Groups* pre-defined group. This may happen because the user is not a member of any valid group, or because all the groups of which a user is a member have been dismissed.

As noted above, a network monitor which analyzes network traffic in the manner described above gives the monitor user the ability to see groups of users and their behavior across a network. Still, given the quantity of data, it can be difficult to see the forest for the trees. What is needed is a way of displaying the data that gives the user to a reasonable description of network behavior and which allows the user to modify network behavior based on that description. The problem is, how do you present as dense a context around network behavior as possible so as to give a good picture of what is going on in the network.

One depiction of network activity is shown in Fig. 3. In this depiction, rows 302 through 309 illustrate groups of users while columns 320-326 illustrate critical business systems (CBSs). The intersection 330 of each row and column indicate the amount of network activity by that group of users to that CBS. In one embodiment, a bubble is displayed at each intersection to display, for instance, the number of users in the group that are accessing that CBS, or the number of accesses, etc.

The bubble table shown in Fig. 3 provides a field of data cross-matching group access behaviors into specific systems. This data is represented as bubbles as described below, but the table provides both a framework and the important context that allows the data to lead users into asking the right questions around constructing policy for their network.

Any shape could be used at the intersection of each row and column. In one embodiment, the bubble is used as a visual measure, providing low-fidelity quantitative information of network activity as filtered by monitor 108. Multiple bubbles give the user a quick comparison of a large related data set and steer the questions in their investigation of identity policy.

In one embodiment, the bubble is a simple circle. The size of the bubble is determined by the amount of bandwidth it represents. The shade of the bubble is determined by whether or not there are outliers within that bubble's data. In one such embodiment, the bubble comes in seven sizes.

In one embodiment, bubble details are presented in the form of a tooltip, consistent in display with other tool-tips displayed by monitor 108. In one embodiment, bubble details provide the amount of bandwidth shown, the number of users involved, and whether or not there are outliers to investigate.

In one embodiment, the bubble graph can be constrained by service using, for instance, a pull-down menu 352 (as shown in Fig. 3). In one such embodiment, pull-down menu 352 only shows services that were active during the time being queried.

In one embodiment, pull-down menu 352 displays service as defined in policy. If a service is only covered by the highest-level definitions ("Tcp," "Udp," "IP") then they may be further broken down by common IANA services. For example, if TCP/1521 is not defined in policy, then it would be reported as the generic "Tcp" service within this widget unless it also relates to a common IANA service.

In one embodiment, clicking on the user group brings up a box 340 with information regarding the services the user group is accessing. In the embodiment shown, the number of users accessing a particular service is graphically displayed by increasing or decreasing the size of the bubble 360 for that service. In one such embodiment, the visual representation of bad behavior is scaled to the equivalent range of the visual representation of good events such that good events don't swamp bad events. In one embodiment, the color of the bubble is used to indicate whether the behavior is potentially good or bad. In one such embodiment, a lighter colored bubble indicates potential bad behavior, while a darker bubble indicates expected behavior. Such an approach makes bad behavior obvious.

In addition to color, in one embodiment the bubble is moved along a continuum line 362 used to indicate if the behavior displayed is expected or unexpected. Unexpected behavior is noted by color and by the designation "Investigate" at the end of the row. (See, e.g., the Secure Shell access by users in the Auditing Contractors group to the Finance Servers, a potentially bad behavior for users outside the Finance Department.)

In one embodiment, you can drill down into each bubble to see the events. In one embodiment, events associated with the users' interaction with the CBS are displayed in order of criticality when the bubble is clicked. In one embodiment, one can drill down into the services to see the events, or drill down into the bubble to see events associated with groups of users.

In one embodiment, the standard bubble graph view is configured by the user to select the CBSs and Groups that should be displayed (or ignored). In one such embodiment, this view is unique to each of the system's users. In another embodiment, columns and rows can be dragged and dropped to their intended position so no other configuration process is needed.

In one embodiment, a simple mechanism is included for removing groups from consideration on all discovery data displays. In one such embodiment, this is done by dismissing a group from the bubble graph and/or the CBS view.

In one embodiment CBSs are displayed left to right in decreasing order of bandwidth occupied.

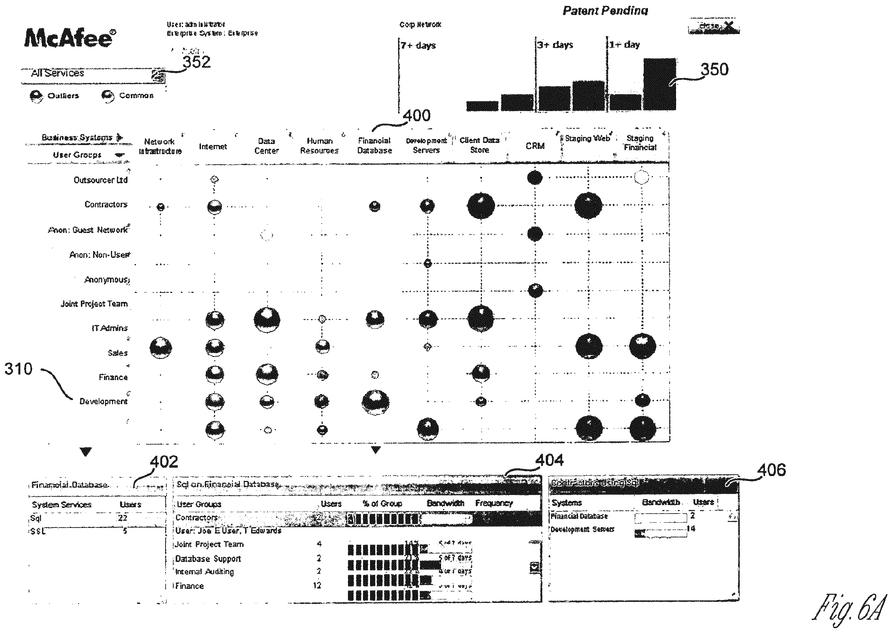

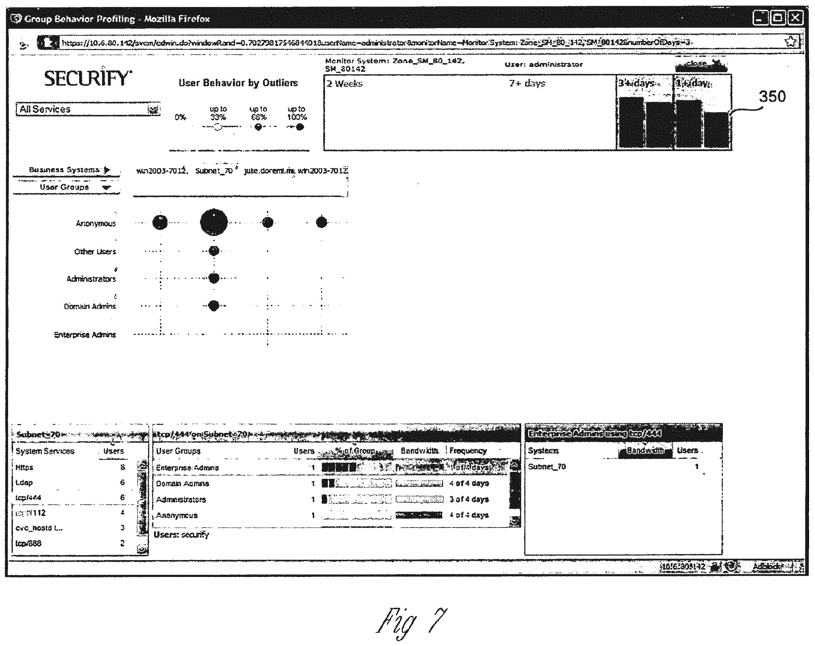

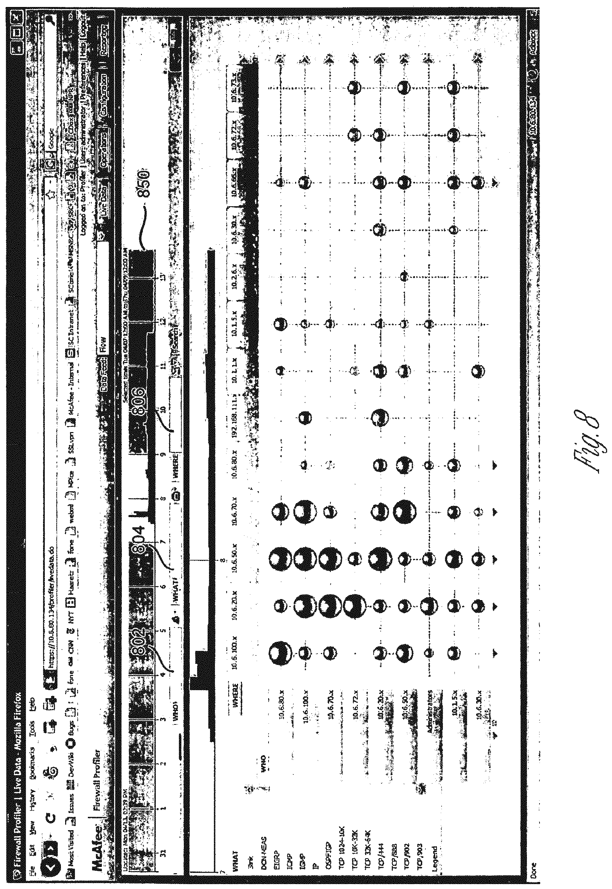

In one embodiment, the application makes a clear distinction between the activities common to most of a group's users of a specific service on a specific system, who can be considered "mainstream" in their behavior, versus the members of a group whose use of a service on a system greatly differs from their peers, who can be considered "outliers" in their behavior. In one such embodiment, as is shown in Fig. 6a, mainstream and outlier groups are shown in different colors. If a group is both an outlier and mainstream (for different services, that is) it is displayed in both colors (e.g., as concentric circles). Alternately, bubble shading across a distinct and obvious continuum as shown in Figs 7 and 8 can be used to denote the number of users involved in the interaction between group and system.

In the embodiment shown in Fig. 3, it is possible to monitor network behavior across particular time intervals based on activity that day, the last day, the last three days, the last seven days or the last two weeks, in addition to free-form time frame selection. A method of selecting the time period to be analyzed is shown in Fig. 3, where each day is shown in the timeline 350 at the top of the page. Selecting within the segment showing the previous week, automatically causes monitor 108 to analyze based on the last two weeks. Selecting within the segment showing days 4-7 automatically causes monitor 108 to analyze based on the last week. Selecting within the segment showing days 2 and 3 automatically causes monitor 108 to analyze based on the three days. Finally selecting day 1 automatically causes monitor 108 to analyze based on the last day.

In one embodiment, a network traffic indicator for each day indicates the amount of traffic saved by monitor 108. The traffic indicator can be used by the user to choose an analysis based on the amount of data available for the given period.

In one embodiment, all selections in timeline 350 are from current hour into the past. Selection grows to the left and shrinks to the right. Clicking in an unselected timeframe makes it the current selection. When the selection is changed, monitor 108 triggers a query, refreshing page data. In one such embodiment, clicking current selection refreshes data if last-queried data is more than one hour older than current time.

In one embodiment, a data refresh is triggered when the current hour moves past the last hour.

In one embodiment, when a new timeframe query is made, controller 108 waits for three seconds before sending the query. This is an expensive query. If a new timeframe query comes from the same user before the last one returns - such as when the user accidentally made the wrong selection -- cancel the first query and start the new one.

In the embodiment shown in Figs. 3-5, the system defaults to displaying all services in all CBSs. By selecting pull-down menu 352, one can select one service to be analyzed across the CBSs, or a subset of services.

In one embodiment, a three-dimensional grid is used to display network activity. In one such embodiment, this involves:
creating a grid having a first, second and third axis;
assigning client groups to the first axis;
assigning critical business systems to the second axis;
assigning services to a third axis;
monitoring network traffic;
displaying network traffic on the grid as a function of client group, service and critical business system, wherein displaying includes associating a point on the first axis with each client group, associating a point on the second axis with each critical business system, associating a point on the third axis with each service and displaying a shape at intersections in the grid between points on the first, second and third axes, wherein the shape varies in size as a function of network traffic associated with a particular client group and a particular critical business system.

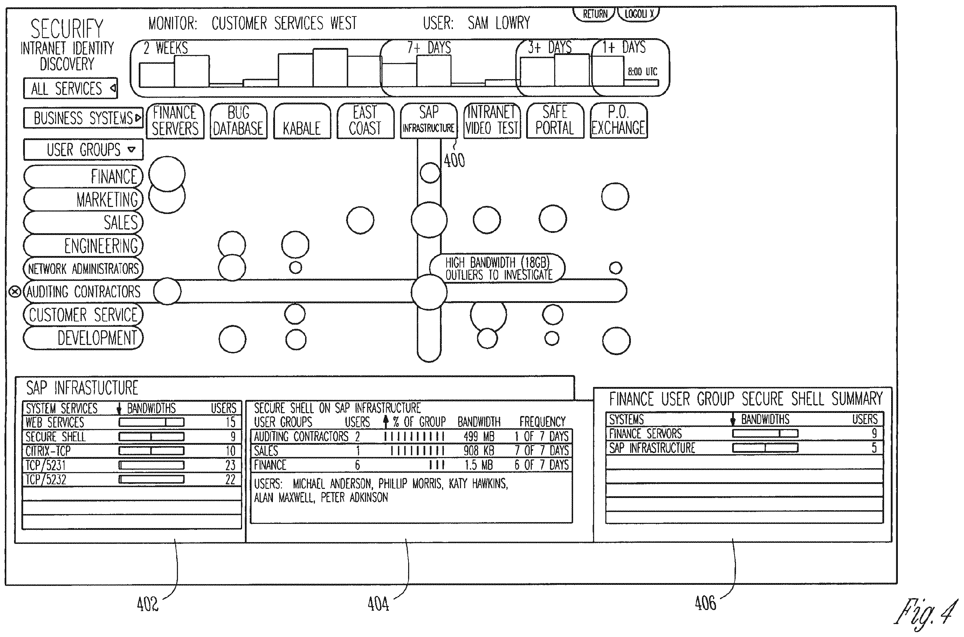

In one embodiment, as is shown in Figs. 3-5, columns have tabbed headers 400 indicating the CBS. In one such embodiment, you can click on the tabbed header 400 to see in real-time the services being provided by that CBS, offering a rich context for a network behavior and its related events within a single page-view. Such an embodiment is shown in Fig. 4.

As can be seen in Fig. 4, in one embodiment, clicking on a column header causes a box 402 to open below the last row. The box 402 includes information as to the services offered by the CBS. By clicking on a system service in box 402, one can determine the user groups accessing that particular service on the CBS (window 404). By clicking on a particular user group in box 402, a window 406 opens listing access by that user group to all the CBSs in system 100.

This display and drill-down methodology provides a mechanism for organizing and tracking services and users in computer system 100.

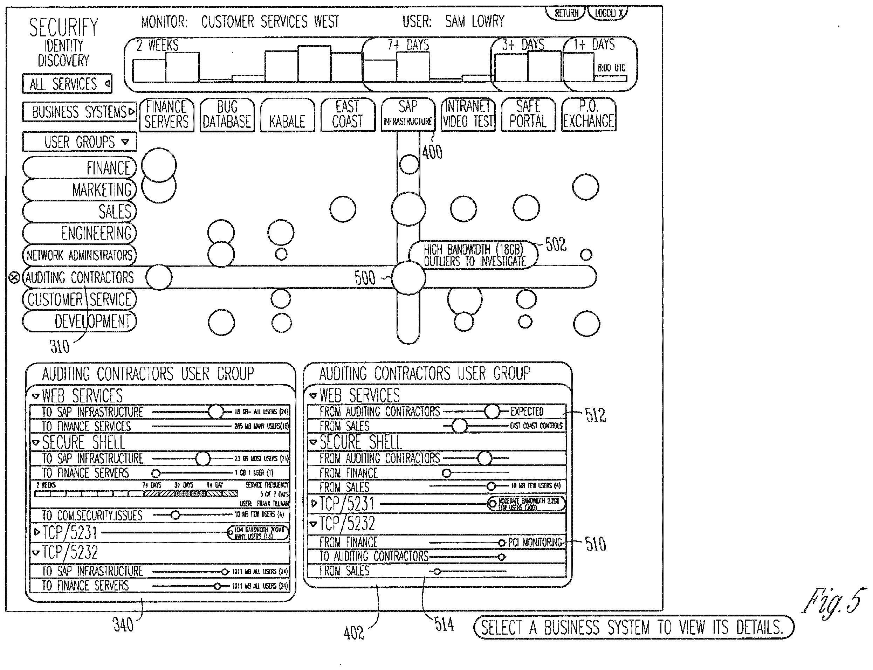

In the embodiment shown in Fig. 5, selecting a column header 400 and a row header 310 results in highlighting both the row and the column, and the display of network transfer bandwidth 502 associated with the intersection 500. In one embodiment, such a selection results in the display of both box 340 and box 402. In one such embodiment, selection of an item within either box 340 or box 402 results in a drill down into the item selected. For example, selection of Secure Shell service access by the Auditing Contractors Group results in the display of information such as service frequency by particular users in the group.

Also shown on Fig. 5, are policy controls 510 and 512. Policy control 510 (labeled "PCI Monitoring") indicates that this particular service for this particular group falls with the PCI Monitoring policy. Selection of control 510 takes the user to another screen that displays the policy. Similarly, policy control 512 (labeled "East Coast Controls") indicates that this particular service for this particular group is covered by the East Coast Control policy. Selection of control 512 takes the user to another screen that displays the East Coast Control policy.

Also shown on Fig, 5, is a control 514 for establishing a threshold level for identifying outliers user groups. In the embodiment shown, control 514 is a line extending across an outlier threshold line for user groups associated with that service. Selection of control 514 allows one to dynamically adjust the outlier threshold by dragging the line right or left.

Once you can display network behavior, it becomes possible to verify traffic against role-based controls and pre-built security best practices. Automated discovery capability helps uncover the "who, what, and where" during the planning phase of change projects, without requiring any rule definition. Fig. 6a illustrates the results of a discovery session conducted on a network using network monitor 108. Once again, Fig. 6a illustrates the pull-down menu 352 and the timeline 350, and the column and row structure used to show user access to services on CBSs.

In the approach shown in Fig. 6a, common or mainstream, user groups are shown as lighter colored bubbles, while outlier user groups are shown as darker bubbles. This makes is much simpler to distinguish between groups.

In one embodiment, network monitor 108 includes a verification capability. In some such embodiments, this verification capability builds on the discovery view. In one embodiment, verification automatically verifies traffic against role-based controls and pre-built security best practices. This verification process can instantly pinpoint and provide real-time alerts on the following representative examples:
1) Access by non-authenticating users, such as terminated employees who have had their access privileges revoked
2) Network access exceptions such as file servers, disallowed network applications, and geographically dispersed printers that are not behaving as expected
3) Verifying access of users that should be on the network, such as reassigned employees or outsourcers who inappropriately, perhaps inadvertently, access systems they shouldn't
4) Unsecured or malicious activities, including tunneling of services like FTP inside of HTTP to transit firewalls
5) Verifying expected usage of administrative protocols or commands, such as web authoring.

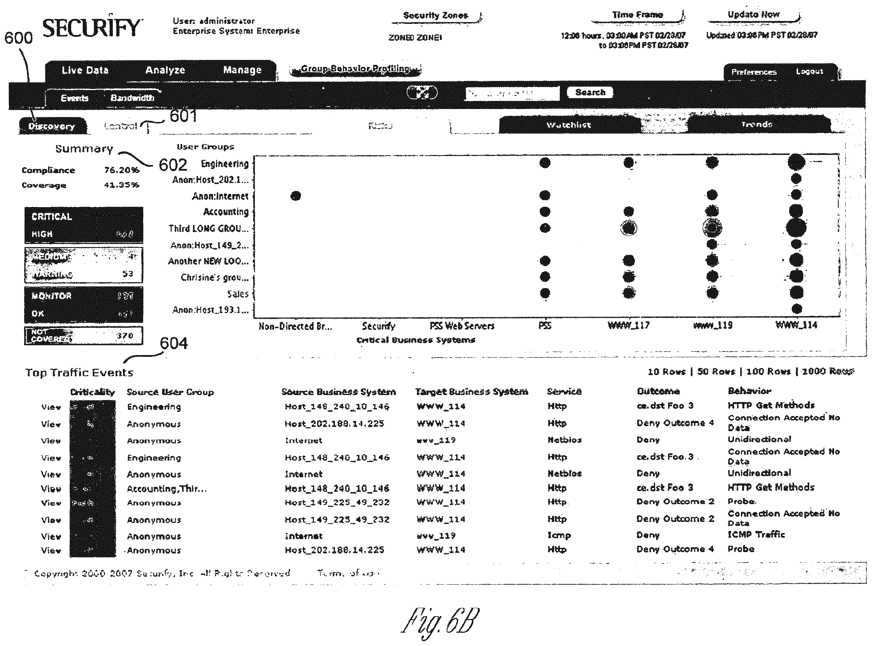

The results are shown in a display such as is shown in Fig. 6b, where color ranges from red through yellow to green as a function of the severity of potential problems, if any. In the embodiment shown in Fig. 6b, the summary box 602 shows compliance with policy to be approximately 76.2% for the traffic surveyed. The top ten events are shown at the bottom of the screen (in section 604), sorted in order of criticality.

In one embodiment, one can easily switch between discovery and verification modes by selecting discovery tab 600 (for data discovery) or control tab 601 (for policy verification).

Fig. 7 illustrates discovery on a computer system with slightly more than four days of discovery data.

The above system can be extended beyond network traffic to discover and control firewalls. Fig. 8 illustrates traffic as a function of users (rows) and destinations (columns), with the "What" list listing the services offered across all the relevant critical business systems. Once again, the bubble color is used to indicate information relative to the intersection of the row and column. In the example shown, the bubble indicates the amount of traffic to that CBS and the color indicates whether the traffic is allowed or denied.

The timeline 850 in Fig. 8 illustrates a different way of displaying the amount and duration of network traffic. Drop down menus 802, 804 and 806 allow the user to select whether to display a single group, a single service or a single CBS, respectively.

### User Discovery

In a directory-based system such as Active Directory, a user can exist in a number of different groups. She may be a member of the Finance Group, the Executive Staff, Employees and Headquarters. In the past, systems that wanted to display network activity as a function of user behavior either had to list all users or all groups or were constrained to selected users or groups of users preselected by the network administrator. Each group-based approach had the limitation that actions of individual users distributed across multiple groups would be duplicated across each of the user's groups, overemphasizing the effect of that user. What is needed is a system and method for automatically assigning users to groups in a way that accurately reflects the actions of each group and that makes it easy to write security policies that cover each user. In one embodiment, given the set of users accessing a particular service on a particular server, we determine the best way to group the users.

In one embodiment, the GBP engine 136 uses one or more of the following algorithms during discovery to determine which groups best represent the clients of a CBS or a CBS-service pair: 1) a group representation algorithm, 2) a client representation algorithm and 3) a group ranking algorithm. In one embodiment, the algorithm to be used is selected by the user.

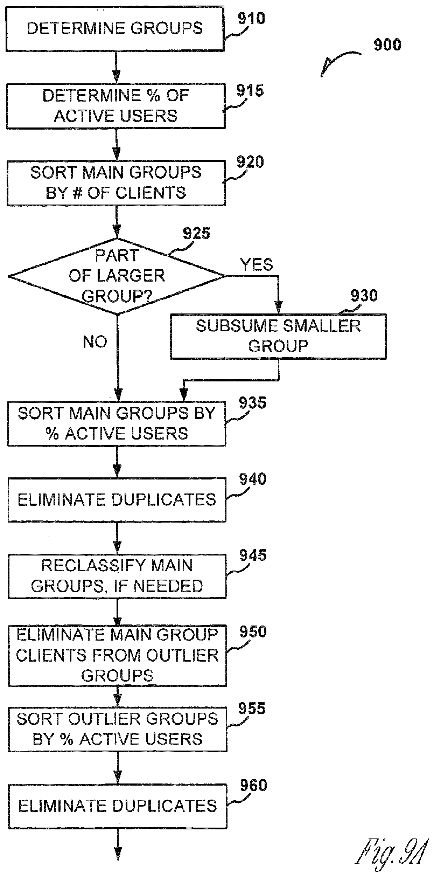

The Group Representation Algorithm is shown in Fig. 9a and is as follows:
Given a target system - CBS or group of CBSs, service or group of services, or a combination of the two - and a set of clients for that target system, compute usage "by group representation" for that target as follows:
1) Compute (at 910) the set of all the groups of which the clients (users or computers) are members using the group information retrieved from the IAA 140, as noted above.
2) For each group, determine (at 915) the ratio of clients that are members of the group to the total number of active users of the group; this is termed the percentage of active users.
3) Segregate the groups into two sets: mainstream and outlier.
Mainstream Groups are those whose percentage of active users is at or above a certain threshold value. The threshold value is configurable and varies depending on the total number of active users in the group. In one embodiment, the default set of threshold values is 50% for groups under 10 active users, 40% for groups between 11 and 100 active users, 30% for groups between 101 and 1000 active users, and 25% for groups larger than 1000 active users. Outlier Groups are those whose percentage of active users falls below this threshold.
4) Within the mainstream groups, sort (at 920) the groups in increasing order of clients.
5) Within the mainstream groups find (at 925) any and all groups whose entire set of clients is contained by another (larger) mainstream group; subsume (at 930) the smaller mainstream group into the larger mainstream group.
6) Sort (at 935) the mainstream groups in descending order of percentage of active users;
7) In the mainstream groups, assign (at 940) each client to one and only one group, giving priority to the groups with the highest percentage of active users, i.e., groups higher in the sorted list;
8) After this step is performed, any mainstream group that falls below the threshold of active users is moved (at 945) to the outliers group.
9) Remove from the outlier groups (at 950) all clients that have been accounted for (i.e., are members of) any of the mainstream groups.
10) Sort the outlier groups (at 955) in descending order of percentage of active users.
11) Assign (at 960) each client to one and only one outlier group, giving priority to the groups with the highest percentage of active users, i.e., groups higher in the sorted list.

The result is a set of user groups for each particular target. The assignment of clients to user groups is a function of target and may change as monitor 108 filters network traffic by target.

The following example illustrates the Group Representation Algorithm:
Discovery Data indicates that a Web Server has 15 distinct clients as follows:
a) 8 clients are members of the Quality Assurance, Engineering and Corporate Employees groups;
b) 2 clients are members of the Engineering and Corporate Employees group;
c) 5 clients are members of the Corporate Employees group.

The composition of these groups is as follows:
a) The Quality Assurance group has 8 active users;
b) The Engineering group has 20 active users;
c) The Corporate Employees group has 100 active users.

Thus, the percentage of active users for each group is:
a) Quality Assurance: 8 out of 8 = 100%
b) Engineering: 10 out of 20 = 50%
c) Corporate Employees: 15 out of 100 = 15%

Both the Quality Assurance and the Engineering groups are mainstream groups while the Corporate Employees group is an outlier. However, because all members of the Quality Assurance group are also members of the Engineering group, the former is subsumed by the latter. Thus, after applying the algorithm noted above, Web Server's clients are assigned to groups as follows:
a) 10 clients are assigned to the Engineering group which is designated a mainstream group;
b) 5 clients are assigned to the Corporate Employees group which is designated an outlier group.

The Client Representation Algorithm will be described next. This algorithm presents different sets of groups that best represent the client set based on different aggregation levels. An aggregation level denotes the ratio of clients that are members of that group to the total number of clients. In one embodiment, three levels are defined:
- 1 - groups that represent 33% or less of the clients;
- 2 - groups that represent between 34% and 66% of the clients;
- 3 - groups that represent between 67% and 100% of the clients;

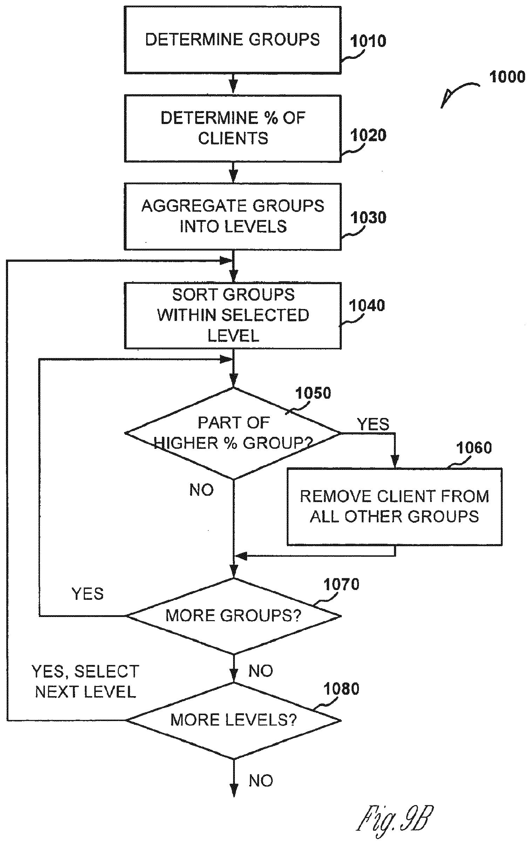

The algorithm is shown in Fig. 9b and is as follows:
1) Compute (at 1010) the set of all the groups of which the clients (users or computers) are members using the group information retrieved from the IAA 140, as noted above.
2) For each group, determine (at 1020) the ratio of clients that are members of the group to the total number of clients; this is termed the percentage of clients. Map this value into an aggregation level.
3) Aggregate (at 1030) all the groups into aggregation levels and select an aggregation level as the selected aggregation level.
4) Sort (at 1040) the selected groups in decreasing order of percentage of clients.
5) Within the selected group, assign each client to one and only one group, giving priority (at 1050) to the groups with the highest percentage of clients; if a selected group's aggregation level falls below the selected aggregation level, move it back to the remaining set of groups.
6) Remove (at 1060) all the clients assigned to the selected groups from the remaining groups.
7) Repeat (at 1070) previous 3 steps until there aren't any groups whose aggregation level matches the selected aggregation level.
8) At 1080, increase the aggregation level by one, making it the selected aggregation level, and repeat the procedure starting at step 3. Once the aggregation level has reached its highest value (3), decrease it by one at every iteration until the lowest aggregation level (1) has been reached or the set of groups remaining to be processed is empty.

After applying the above algorithm, any groups whose percentage of clients falls outside the selected aggregation level are considered outliers.

The following example illustrates the Client Representation Algorithm:
Discovery Data indicates that a Web Server has 15 distinct clients as follows:
a) 8 clients are members of the Quality Assurance, Engineering and Corporate Employees groups;
b) 2 clients are members of the Engineering and Corporate Employees group;
c) 5 clients are members of the Corporate Employees group.

The percentage of clients for each group is:
a) Quality Assurance: 8 out of 15 = 53% (aggregation level 2)
b) Engineering: 10 out of 15 = 66% (aggregation level 2)
c) Corporate Employees: 15 out of 15 = 100% (aggregation level 3)

If the selected aggregation level is 1 (0-33%), none of the groups fall under this aggregation level, therefore, all groups are designated outliers. The assignment of clients to groups proceeds as under aggregation level 2 below. If the selected aggregation level is 2 (34-66%), both Quality Assurance and Engineering fall under this aggregation level. Engineering represents a higher percentage of clients and is picked to represent 10 out of the 15 total number of clients. Quality Assurance is left with 0 (zero) clients and Corporate Employees accounts for the remaining 5 clients which represent 33% of the total clients (aggregation level 1). The algorithm attempts to select groups with next higher aggregation level (3) and, failing to find any, reduces the aggregation level first to 2 and then to 1 where Corporate Employees is selected as representative of the remaining 5 clients. Engineering is designated a mainstream group and Corporate Employees is designated an outlier.

If the selected aggregation level is 3 (67-100%), only Corporate Employees falls under this aggregation level. Since it accounts for 100% of the clients it is designated a mainstream group and no groups are designated outliers.

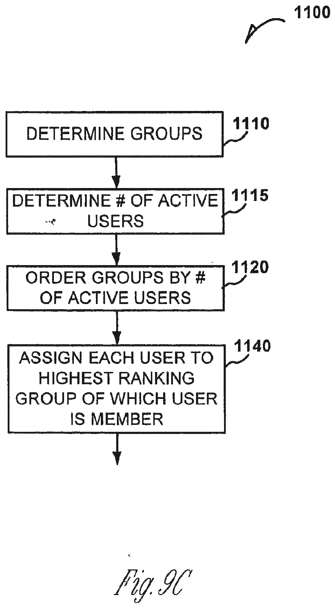

A Group Ranking Algorithm (1100) will be discussed next. As can be seen in Fig. 9c,
1) Compute (at 1110) the set of all the groups of which the clients (users or computers) are members using the group information retrieved from the IAA 140, as noted above.
2) For each group, retrieve from the IAA (at 1115) the count of group members that are active users.
3) Order (at 1120) the groups by increasing number of active users such that a group with a small number of active users ranks higher than a group with a larger number of active users.
4) Assign each user to the highest ranked group of which he is a member.

The following example illustrates the Group Ranking Algorithm:
Discovery Data indicates that a Web Server has 15 distinct clients who are members of 3 different groups whose composition is as follows:
a) The Quality Assurance group has 8 active users;
b) The Engineering group has 20 active users;
c) The Corporate Employees group has 100 active users.

Thus, ordering the groups by increasing number of active users yields:
1. Quality Assurance (8)
2. Engineering (20)
3. Corporate Employees (100)

As a result, any client who is a member of Quality Assurance will be assigned to the Quality Assurance group regardless of any other group membership. Likewise, any client who is a member of Engineering (but not Quality Assurance) is assigned to the Engineering group. All other clients are assigned to the Corporate Employees group.

### Asset Discovery

In one embodiment, the GBP engine 136 uses an asset discovery algorithm during discovery to determine which CBSs to include in the list of Critical Business Systems.

In one embodiment of the invention, CBS discovery is automated from the DDC information, as follows.

At 1210, network traffic is reviewed for potential critical assets.

At 1220, the number of events for each asset found is compared to the number of events of all assets found to determine if the asset is a critical asset. If not, control moves to 1260.

If, at 1220, the number of events for each asset found indicates that the asset is a critical asset, control moves to 1230. At 1230, the number of packets for each asset found is compared to the number of packets of all assets found to determine if the asset is a critical asset. If not, control moves to 1260.

If, at 1230, the number of packets for each asset found indicates that the asset is a critical asset, control moves to 1240 and the asset is designated a critical asset (or Critical Business System (CBS)). In one embodiment, an asset is a critical asset if the events per asset of this asset places the asset in the top P1 percentile of all the assets found and if the packets per asset of this asset places the asset in the top P2 percentile of all the assets found. In one such embodiment, P1 and P2 equal 90%. Control then moves to 1250 and the process is repeated until all assets found have been reviewed.

At 1260, the number of users accessing each asset is compared to the number of users accessing each of the other assets found to determine if the asset is a critical asset. If not, control moves to 1250.

If, at 1260, the number of users accessing each asset found indicates that the asset is a critical asset, control moves to 1270. At 1270, the number of packets for each asset found is compared to the number of packets of all assets found to determine if the asset is a critical asset. If not, control moves to 1260. Note: this test may use different parameters than the test at 1230.

If, at 1270, the number of packets for each asset found indicates that the asset is a critical asset, control moves to 1240 and the asset is designated a critical asset (or Critical Business System (CBS)). In one embodiment, an asset is a critical asset if the users per asset of this asset places the asset in the top P3 percentile of all the assets found and if the packets per asset of this asset places the asset in the top P4 percentile of all the assets found. In one such embodiment, P3 and P4 equal 75%. Control then moves to 1250 and the process is repeated until all assets found have been reviewed.

In one embodiment, for each DDC data set, the monitor 108 computes histograms for the number of events, the number of packets, and the number of clients. For example, one histogram lists how many hosts have 1-100 events, how many 100-200 events, and so on. For purposes of CBS discovery, these numbers are summed over all the services accessing the CBS.

From the histogram data, a percentile may be computed by dividing the domain of the data into 100 parts.

From this histogram data, CBS's are assigned as follows:
Hosts above a fixed percentile of events AND of packets (set intersection) are considered to be CBS's. In one embodiment, this fixed percentile is 90 percent.

Hosts with at least a fixed percentile of number of users, also having a second fixed percentile of packets are considered to be CBS's. In one embodiment, the fixed percentile and second fixed percentile are both 75 percent.

In one embodiment of the invention, this algorithm is applied to subsequent DDC data sets, and newly discovered CBS's are merged in with those discovered in previous applications of the algorithm.

In one embodiment of the invention, the monitor 108 ignores DDC data sets unless minimum number of events, packets and users appear in the data.

In one embodiment of the invention, the monitor 108 ignores DDC data sets until a fixed time interval has passed after system startup.

In one embodiment of the invention, the monitor 108 maintains a list of hosts that are excluded from consideration as CBS's, such as hosts that are members of a DHCP pool.

In one embodiment of the invention, the monitor 108 additionally requires that a CBS be derived from a DDC data set more than a minimum number of times, such as 2, in an interval of time, such as one day, or it is excluded from consideration.

In one embodiment of the invention, the monitor 108 removes CBS's from its list of previously discovered CBS's if they fail to be identified as CBS's more than a minimum number of times per day, such as 3.

In one embodiment of the invention, CBS discovery is performed based on a template of services. The templates are created by the network administrator. Each template indicates a list of services and the kind of CBS that corresponds to this list. For example, a Microsoft Exchange Server might include the services: SMB, SMTP, POP, IMAP, RPC. For each host in each DDC data set, the monitor 108 computes the total services exported by that host, and compares this to each template. Hosts that match are considered to be CBS's.

### Discovery for Policy Development

In one embodiment, assigning users to groups that best represent them using the Group Representation Algorithm, the Client Representation Algorithm or the Group Ranking Algorithm allows a network administrator to determine how the resources of the network's critical business systems are being used and tailor policy controls that enable appropriate use while preventing undesirable access behavior, as in a network monitoring system or a firewall.

This process of policy definition and refinement is greatly enhanced and simplified by the application's ability to automatically segregate users into mainstream groups and outlier groups. In one embodiment, the network administrator automatically creates policy controls that enable mainstream groups to access the network resources. Clients that belong to outlier groups are scrutinized and, if deemed to be legitimate users of the resource, the outlier group is sub-divided to include just the set of users that are authorized.

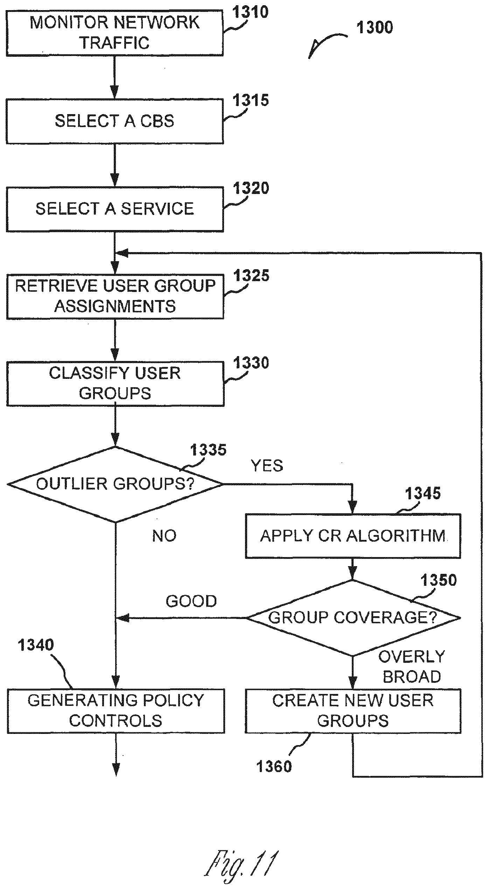

In one embodiment, as is shown in Fig. 11, the policy refinement workflow, using the GBP UI, is thus:
1. Select a timeframe for traffic analysis; this timeframe should be sufficiently long to allow for the collection of a representative sample of traffic, such as one week. Then monitor (at 1310) network traffic for the selected timeframe.
2. Select, at 1315, a CBS for which additional policy controls are desirable; this selection may be based on amount of traffic to that CBS or the number of users that are clients of the CBS, or it may be determined by the relative importance of the CBS.
3. Select, at 1320, a service offered by the CBS and review, at 1325. the group assignments presented by the application using the Group Representation Algorithm, classify, at 1330, each user group as either mainstream or outlier:
   a. If, at 1335, a very small number of mainstream groups are presented and there are no outlier groups, automatically create policy controls at 1340 for the mainstream groups.
   b. If, at 1335, there is a mix of mainstream and outlier groups presented, use the Client Representation Algorithm at 1345 to determine at 1350 if there is a group, or small number of groups, that comprises the entire client set without any one group being overly broad (e.g., if the only available user group that contains both user groups "Finance" and "Marketing" was the user group "Employees," that could potentially be overly broad. Cross-check access by this group to the same or similar services against other CBSs to further substantiate the presumed access rights. If such a group (or groups) is found, create the corresponding policy controls at 1340.
   c. If the Client Representation Algorithm does not yield a strong set of candidate groups, or the groups presented by the Group Representation Algorithm are all outliers, create at 1360 one or more new groups that are a better fit to the client set and recompute the assignment of clients to groups at 1325 using the new groups.

The identity-aware network monitoring system and method described above helps lower cost and enable faster and broader deployment of visibility into "who is doing what and where" across applications and networks.

Ultimately, the systems and methods described above help increase efficiency and compliance by:
Replacing time-intensive manual discovery surveys
Simplifying the process of defining identity-based controls
Dispensing with the inaccurate manual verification of logs
Decreasing investigation time for access violations with correlated data
Reducing disruption of erroneous infrastructure and access changes
Monitor and control access to network resources without application recoding
At the same time, the systems and methods described above help reduce risk by:
   Detecting inappropriate user behavior after network authentication and authorization
   Eliminating the bypassing of security gateways and access controls
   Compensating control for unprotected custom applications
   Detecting abuses from deprovisioned users and users assigned to new roles
   Monitoring the use of privileged accounts.

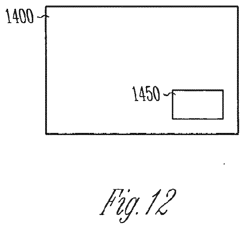

FIG. 12 is a schematic diagram illustrating a medium having an instruction set that results in an identity-aware network monitoring system and method according to an example embodiment. A machine-readable medium 1400 includes any type of storage medium such as a disk drive or a solid state memory device, or the like. A machine-readable medium 1400 includes instructions within an instruction set 1450. The instruction set 1450, when executed by a machine such as an information handling system or a processor, cause the machine to perform operations such as displaying identity-based network behavior and controlling access to and behavior of networks as a function of observed identity-based network behavior.

In an example embodiment of a machine-readable medium 1400 that includes the instruction set 1450, the instructions, when executed by a machine, cause the machine to perform operations such as automatic grouping of users in groups and automatic discovery of network assets and network policy.

Thus, methods and a machine-readable medium including instructions for displaying and controlling network behavior based on identity have been described. Although the various methods for electing a displaying and controlling network behavior based on identity have been described with reference to specific example embodiments, it will be evident that various modifications and changes may be made to these embodiments without departing from the broader embodiment of the disclosed subject matter. Accordingly, the specification and drawings are to be regarded in an illustrative rather than a restrictive sense.

Although specific embodiments have been illustrated and described herein, it will be appreciated by those of ordinary skill in the art that any arrangement that achieve the same purpose, structure, or function may be substituted for the specific embodiments shown. This application is intended to cover any adaptations or variations of the example embodiments of the invention described herein. It is intended that this invention be limited only by the claims, and the full scope of equivalents thereof.

## Claims

1. A method of discovering critical assets in a computer network having a plurality of assets, comprising:
monitoring (1210) network traffic, wherein monitoring includes finding assets in the network traffic;
determining, for each of the assets found in the network traffic, events, packets and users per asset;
for each asset found in the network traffic, if the events per asset of the asset are greater than the events per asset of a first percentile of all assets found in the network traffic and if the packets per asset of the asset are greater than the packets per asset of a second percentile of all assets found in the network traffic, designating (1240) said asset as a critical asset;
for each asset found in the network traffic, if the users per asset of the asset are greater than the users per asset of a third percentile of all assets found in the network traffic and if the packets per asset of the asset are greater than the packets per asset of a fourth percentile of all assets found in the network traffic, designating said (1240) asset as a critical asset; and
removing a first designated critical asset from a group of previously determined critical business systems if the first designated critical asset fails to be identified as a critical asset more than a minimum number of times in a pre-determined time period.

2. The method of claim 1, wherein the first and second percentiles are set at the 90 percentile while the third and fourth percentiles are set at the 75^{th} percentile.

3. The method of any of claims 1-2, wherein determining includes computing histograms for the number of events, the number of packets, and the number of clients.

4. The method of any of claims 1-3, wherein monitoring further includes storing monitored network traffic over predefined periods of time as data sets and wherein finding includes determining if subsequent data sets introduce new assets to be considered as critical assets.

5. A machine-readable storage medium including machine-readable instructions, when executed cause a programmable device to discover critical assets in a computer network having a plurality of assets, the instructions causing the programmable device to perform the method according to any one of preceding claims 1 to 4.

6. An apparatus comprising:
a programmable processor; and
a memory, wherein the memory stores instructions that when executed by the programmable processor cause the apparatus to perform the method according to any one of preceding claims 1 to 4.

## Patentansprüche

1. Verfahren zur Bewerten kritischer Anlagen in einem Computernetz, das mehrere Anlagen besitzt, das Folgendes umfasst:
Überwachen (1210) von Netzverkehr, wobei das Überwachen das Finden von Anlagen in dem Netzverkehr enthält;
Bestimmen für jede der in dem Netzverkehr gefundenen Anlagen von Ereignissen, Paketen und Anwendern pro Anlage;
für jede in dem Netzverkehr gefundene Anlage, falls die Ereignisse pro Anlage der Anlage mehr als die Ereignisse pro Anlage eines ersten Perzentils sämtlicher Anlagen, die in dem Netzverkehr gefunden werden, sind und falls die Pakete pro Anlage der Anlage mehr als die Pakete pro Anlage eines zweiten Perzentils sämtlicher Anlagen, die in dem Netzverkehr gefunden werden, sind, Bezeichnen (1240) der Anlage als eine kritische Anlage;
für jede in dem Netzverkehr gefundene Anlage, falls die Anwender pro Anlage der Anlage mehr als die Anwender pro Anlage eines dritten Perzentils sämtlicher Anlagen, die in dem Netzverkehr gefunden werden, sind und falls die Pakete pro Anlage der Anlage mehr als die Pakete pro Anlage eines vierten Perzentils sämtlicher Anlagen, die in dem Netzverkehr gefunden werden, sind, Bezeichnen (1240) der Anlage als eine kritische Anlage; und
Entfernen einer ersten bezeichneten kritischen Anlage aus einer Gruppe vorher bestimmter kritischer Geschäftssysteme, falls die erste bezeichnete kritische Anlage während einer vorgegebenen Zeitdauer nicht in einer Mindestanzahl als eine kritische Anlage identifiziert werden kann.

2. Verfahren nach Anspruch 1, wobei das erste und das zweite Perzentil auf das Perzentil 90 eingestellt sind, während das dritte und das führte Perzentil auf das Perzentil 75 eingestellt sind.

3. Verfahren nach einem der Ansprüche 1-2, wobei das Bestimmen das Berechnen von Histogrammen für die Anzahl von Ereignissen, die Anzahl von Paketen und die Anzahl von Kunden umfasst.

4. Verfahren nach einem der Ansprüche 1-3, wobei das Überwachen ferner das Speichern von überwachtem Netzverkehr über im Voraus definierte Zeitdauern als Datenmengen umfasst und wobei das Finden das Bestimmen umfasst, ob nachfolgende Datenmengen neue Anlagen, die als kritische Anlagen anzusehen sind, einführen.

5. Maschinenlesbares Speichermedium, das maschinenlesbare Befehle enthält, die dann, wenn sie ausgeführt werden, eine programmierbare Vorrichtung dazu veranlassen, kritische Anlagen in einem Computernetz, das mehrere Anlagen besitzt, zu bewerten, wobei die Befehle die programmierbare Vorrichtung dazu veranlassen, das Verfahren nach einem der vorhergehenden Ansprüche 1 bis 4 auszuführen.

6. Vorrichtung, die Folgendes umfasst:
einen programmierbaren Prozessor; und
einen Speicher, wobei der Speicher Befehle speichert, die dann, wenn sie durch den programmierbaren Prozessor ausgeführt werden, die Vorrichtung dazu veranlassen, das Verfahren nach einem der vorhergehenden Ansprüche 1 bis 4 auszuführen.

## Revendications

1. Procédé de découverte d'actifs clés dans un réseau d'ordinateurs ayant une pluralité d'actifs, comprenant :
la surveillance (1210) d'un trafic de réseau, dans lequel la surveillance comporte le fait de trouver des actifs dans le trafic de réseau ;
la détermination, pour chacun des actifs trouvés dans le trafic de réseau, d'évènements, de paquets et d'utilisateurs par actif ;
pour chaque actif trouvé dans le trafic de réseau, si les événements par actif de l'actif sont supérieurs aux événements par actif d'un premier percentile de tous les actifs trouvés dans le trafic de réseau et si les paquets par actif de l'actif sont supérieurs aux paquets par actif d'un deuxième percentile de tous les actifs trouvés dans le trafic de réseau, la désignation (1240) dudit actif en tant qu'actif clé ; pour chaque actif trouvé dans le trafic de réseau, si les utilisateurs par actif de l'actif sont supérieurs aux utilisateurs par actif d'un troisième percentile de tous les actifs trouvés dans le trafic de réseau et si les paquets par actif de l'actif sont supérieurs aux paquets par actif d'un quatrième percentile de tous les actifs trouvés dans le trafic de réseau, la désignation (1240) dudit actif en tant qu'actif clé ; et
l'élimination d'un premier actif clé désigné d'un groupe de systèmes d'affaire clé précédemment déterminés si le premier actif clé désigné ne peut pas être identifié en tant qu'actif clé plus d'un nombre de fois minimal dans une période de temps prédéterminée.

2. Procédé selon la revendication 1, dans lequel les premier et deuxième percentiles sont fixés au 90^{e} percentile tandis que les troisième et quatrième percentiles sont fixés au 75^{e} percentile.

3. Procédé selon l'une quelconque des revendications 1 et 2, dans lequel la détermination comporte le calcul informatique d'histogrammes pour le nombre d'évènements, le nombre de paquets et le nombre de clients.

4. Procédé selon l'une quelconque des revendications 1 à 3, dans lequel la surveillance comporte en outre le stockage d'un trafic de réseau surveillé sur des périodes de temps prédéfinies en tant qu'ensembles de données et dans lequel le fait de trouver comporte le fait de déterminer si des ensembles de données ultérieurs introduisent de nouveaux actifs à considérer en tant qu'actifs clés.

5. Support de stockage lisible par machine comportant des instructions lisibles par machine qui, lorsqu'elles sont exécutées, amènent un dispositif programmable à découvrir des actifs clés dans un réseau d'ordinateurs ayant une pluralité d'actifs, les instructions amenant le dispositif programmable à réaliser le procédé selon l'une quelconque des revendications 1 à 4 précédentes.

6. Appareil comprenant :
un processeur programmable ; et
une mémoire, dans lequel la mémoire stocke des instructions qui, lorsqu'elles sont exécutées par le processeur programmable, amènent l'appareil à réaliser le procédé selon l'une quelconque des revendications 1 à 4 précédentes.
